# EUROPÄISCHE PATENTSCHRIFT

(11) **EP 0 868 833 B1**
(45) Veröffentlichungstag und Bekanntmachung des Hinweises auf die Patenterteilung: **02.01.2002**
(21) Anmeldenummer: 97910250.6
(22) Anmeldetag: 02.10.1997
(51) Int. Cl.: H05B 41/00, H01J 61/56

(54) **HOCHDRUCKENTLADUNGSLAMPE MIT EINER ZÜNDHILFSELEKTRODE SOWIE SCHALTUNGSANORDNUNG UND VERFAHREN ZUM BETRIEB**
HIGH-PRESSURE DISCHARGE LAMP WITH AN AUXILIARY IGNITION ELECTRODE AS WELL AS CIRCUITRY AND PROCESS FOR OPERATION
LAMPE A DECHARGE HAUTE PRESSION A ELECTRODE AUXILIAIRE D'AMOR AGE, AINSI QUE CIRCUIT ET PROCEDE POUR SON FONCTIONNEMENT

(30) Priorität: 23.10.1996 DE 19644115
(43) Veröffentlichungstag der Anmeldung: 07.10.1998
(73) Patentinhaber: Patent-Treuhand-Gesellschaft für elektrische Glühlampen mbH, 81543 München (DE)
(72) Erfinder: HIRSCHMANN, Günther, D-81735 München (DE); MÜLLER, Stefan, D-73734 Esslingen (DE); MENGELE, Matthias, D-81667 München (DE); WITTIG, Christian, D-81545 München (DE); LEWANDOWSKI, Bernd, D-82340 Feldafing (DE)
(86) Internationale Anmeldenummer: DE9702271
(87) Internationale Veröffentlichungsnummer: WO9818297

(56) Entgegenhaltungen:
- EP-A- 0 294 604
- EP-A- 0 567 408
- US-A- 4 769 578
- US-A- 5 036 256

## Beschreibung

Die Erfindung betrifft eine Schaltungsanordnung zum Betrieb einer Hochdruckentladungslampe gemäß dem Oberbegriff des Patentanspruches 1 sowie ein Beleuchtungssystem mit einer Hochdruckentladungslampe und einem Betriebsgerät für die Hochdruckentladungslampe.

### I. Technisches Gebiet

Insbesondere betrifft die Erfindung eine Schaltungsanordnung zum Betrieb einer niederwattigen Halogen-Metalldampf-Hochdruckentladungslampe, die beispielsweise in Kraftfahrzeugscheinwerfern verwendet wird und deren Nennleistung typischerweise ca. 35 Watt beträgt, sowie ein Beleuchtungssystem bestehend aus einer niederwattigen Halogen-Metalldampf-Hochdruckentladungslampe und einem darauf abgestimmten Betriebsgerät.

Die Hochdruckentladungslampe besitzt ein Entladungsgefäß aus Quarzglas, das mittels Molybdänfolieneinschmelzungen gasdicht verschlossen und von einem Außenkolben umgeben ist. In den Entladungsraum ragen zwei Gasentladungselektroden hinein, die über die Molybdänfolieneinschmelzungen mit externen Stromzuführungen elektrisch leitend verbunden sind. Die im Entladungsraum eingeschlossene ionisierbare Füllung dieser Lampe besteht aus Xenon und Metallhalogeniden.

Das Betriebsgerät bzw. die im Betriebsgerät untergebrachte Schaltungsanordnung zum Betrieb einer in einem Kraftfahrzeug-Scheinwerfer eingesetzten Hochdruckentladungslampe wird üblicherweise vom Bordnetz des Kraftfahrzeugs mit elektrischer Energie versorgt. Das heißt, die Schaltungsanordnung wird von einer Niedervolt-Spannungsquelle mit einer Gleichspannung von typischerweise 12 V oder 24 V gespeist. Mit Hilfe der Schaltungsanordnung muß diese vom Bordnetz gelieferte Gleichspannung hochtransformiert werden, so daß sie den für den Lampenbetrieb erforderlichen Bedürfnissen entspricht. Beispielsweise wird zum Zünden der Hochdrukkentladungslampe im kalten Zustand eine Zündspannung von wenigen Kilovolt benötigt, während zum Heiß-Wiederzünden derselben Hochdrukkentladungslampe - das heißt, zum Zünden im noch heißen Zustand - eine Zündspannung von ca. 20 kV erforderlich ist. Nach erfolgter Zündung beträgt die Betriebsspannung der Hochdruckentladungslampe, das heißt der zur Aufrechterhaltung der Bogenentladung erforderliche Spannungsabfall über der Entladungsstrecke, nur noch ungefähr 80 V bis 100 V.

### II. Stand der Technik

Die europäische Patentschrift EP 0 294 604 offenbart eine Schaltungsanordnung zum Betrieb einer Hochdruckentladungslampe an einer Niedervolt-Spannungsquelle, insbesondere zum Betrieb einer 35 W-Halogen-Metalldampf-Hochdruckentladungslampe am 12V-Bordnetz eines Kraftfahrzeuges. Diese Schaltungsanordnung besitzt einen selbstanschwingenden Gegentaktwandler, der mit zwei alternierend schaltenden Leistungstransistoren und zwei Transformatoren ausgestattet ist. Der eine Transformator ist Bestandteil der Ansteuerungsvorrichtung für die Leistungstransistoren, während der andere Transformator zur Übertragung der mittelfrequenten Schwingung des Gegentaktwandlers auf einen Serienresonanzkreis dient. Die Hochdruckentladungslampe bzw. die Entladungsstrecke der Hochdrukkentladungslampe ist in einen Parallelkreis zum Resonanzkondensator des Serienresonanzkreises geschaltet. Die Primärwicklung des zur Ansteuerungsvorrichtung gehörenden Transformators liegt in Reihe zur Sekundärwicklung des den Serienresonanzkreis versorgenden Transformators, um eine Anpassung der Ansteuerung des Gegentaktwandlers an die zu betreibende Lampe zu ermöglichen. Ferner besitzt die Schaltungsanordnung eine Vorrichtung zur Änderung der Zeitkonstanten der Steuerkreise des Gegentaktwandlers, um einerseits eine Stabilisierung der Lampenleistung bei Betriebsspannungsänderungen zu gewährleisten und um andererseits während der Einbrennphase der Hochdruckentladungslampe einen erhöhten Anlaufstrom zur Verfügung zu stellen. Zum Zünden der Hochdruckentladungslampe wird mittels Resonanzüberhöhung am Resonanzkondensator des Serienresonanzkreises eine sinusförmige Wechselspannung mit einer Frequenz von 45 kHz und einer Amplitude von bis zu ca. 18 kV generiert, die die Lampe innerhalb einer Zeitspanne von 6 ms zündet.

Die Offenlegungsschrift EP 0 567 408 A1 offenbart eine Schaltungsanordnung für eine in einem Kraftfahrzeugscheinwerfer verwendete Entladungslampe. Diese Schaltungsanordnung besitzt einen Spannungswandler, einen Transformator mit einer Primärwicklung und drei Sekundärwicklungen sowie eine Impuls-Zündvorrichtung. Zwei Sekundärwicklungen des Transformators sind in den Lampenstromkreis geschaltet, während die dritte Sekundärwicklung zur Spannungsversorgung der Impuls-Zündvorrichtung dient. Die Impuls-Zündvorrichtung weist einen Zündtransformator auf dessen Sekundärwicklung in den Lampenstromkreis geschaltet ist und dessen Primärwicklung in Reihe zu einer Funkenstrecke angeordnet ist.

Das US Patent US 5,036,256 beschreibt eine Schaltungsanordnung für eine Hochdruckentladungslampe, die beispielsweise in einem Kraftfahrzeugscheinwerfer verwendet werden kann. Diese Schaltungsanordnung besitzt einen von einer Niedervolt-Spannungsquelle gespeisten Gegentaktwandler mit zwei Schalttransistoren und einem Transformator. Der Transformator des Gegentaktwandlers überträgt dessen hochfrequente Ausgangsspannung in den Lastkreis, in den die Hochdrukkentladungslampe geschaltet ist. Die Frequenz dieser Ausgangsspannung beträgt ca. 20 kHz. Die hochfrequente Induktionsspannung an der Sekundärwicklung des Gegentaktwandler-Transformators wird mittels eines Brückengleichrichters in eine Gleichspannung für den Gleichstrombetrieb der Hochdruckentladungslampe konvertiert. Zum Zünden der Hochdruckentladungslampe besitzt die Schaltungsanordnung eine Impuls-Zündvorrichtung, die eine Funkenstrecke, einen Stoßkondensator und einen Impulstransformator aufweist und an den Hauptelektroden, über der Entladungsstrecke der Hochdruckentladungslampe Zündspannungsimpulse von bis zu 30 kV erzeugt. Die Sekundärwicklungen des Impulstransformators sind in Reihe zur Entladungsstrecke der Hochdruckentladungslampe geschaltet, so daß nach erfolgter Lampenzündung der gesamte Betriebsstrom durch die Sekundärwicklungen des Impulstransformators fließt. Um die für den sicheren Übergang von der Glimm- zur Bogenentladung erforderliche Übernahme-Energie bereitzustellen, besitzt die in diesem US-Patent offenbarte Schaltungsanordnung ferner einen aus mehreren Dioden und Kondensatoren bestehenden Spannungsvervielfacher, dem ein Speicherkondensator nachgeschaltet ist.

### III. Darstellung der Erfindung

Es ist die Aufgabe der Erfindung, eine verbesserte Schaltungsanordnung zum Betrieb einer Hochdruckentladungslampe bereitzustellen. Insbesondere soll die Schaltungsanordnung den flimmerfreien Betrieb einer in einem Kraftfahrzeugscheinwerfer eingesetzten Hochdruckentladungslampe ermöglichen und eine sichere Kalt- und Warmzündung dieser Lampe sowie einen schnellen und sicheren Übergang von der Glimm- in die Bogenentladung gewährleisten.

Diese Aufgabe wird erfindungsgemäß durch die kennzeichnenden Merkmale des Patentanspruchs 1 gelöst. Besonders vorteilhafte Ausführungen der Erfindung sind in den Unteransprüchen beschrieben.

Die erfindungsgemäße Schaltungsanordnung besitzt einen Spannungswandler, der eine Wechselspannung erzeugt, einen an den Spannungswandler angeschlossenen Transformator, der die vom Spannungswandler generierte Wechselspannung in den als Serienresonanzkreis ausgebildeten Lastkreis für die Hochdruckentladungslampe überträgt, und eine Impuls-Zündvorrichtung für die Hochdruckentladungslampe. Die Resonanzfrequenz des unbelasteten Serienresonanzkreises liegt zwischen 500 kHz und 3 MHz. Der an den Spannungswandler angeschlossene Transformator besitzt erfindungsgemäß mindestens zwei Sekundärwicklungen, wobei die erste Sekundärwicklung in den als Serienresonanzkreis ausgebildeten Lastkreis geschaltet und die zweite Sekundärwicklung an den Spannungseingang der Impuls-Zündvorrichtung angeschlossen ist. Der Zündspannungsausgang der Impuls-Zündvorrichtung ist zum Anschluß an eine Zündhilfselektrode der zu betreibenden Hochdrukkentladungslampe vorgesehen. Die Spannungsversorgung der Impuls-Zündvorrichtung und des Lastkreises durch zwei Sekundärwicklungen des an den Spannungswandler angeschlossenen Transformators erlaubt eine Entkoppelung der Zündvorrichtung vom Lastkreis, in den der Serienresonanzkreis und die Hochdruckentladungslampe geschaltet sind, so daß nach erfolgter Lampenzündung der Betriebsstrom für die Hochdruckentladungslampe nicht durch die Zündvorrichtung fließen muß. Dadurch kann die Zündvorrichtung in wesentlich kompakterer Bauweise ausgeführt werden, da die Komponenten der Zündvorrichtung nicht die vergleichsweise hohe Stromstärke des Betriebsstromes während der Anlaufphase und während des Lampenbrennbetriebs aushalten müssen. Während der Zündphase und während der darauf folgenden Anlaufphase der Hochdruckentladungslampe wird mit Hilfe des Serienresonanzkreises mittels der Methode der Resonanzüberhöhung am Resonanzkondensator die für den Übergang von der Glimm- zur Bogenentladung erforderliche Übernahme-Energie für die Hochdruckentladungslampe bereitgestellt. Die oben erläuterte erfindungsgemäße Entkoppelung von Zündvorrichtung und Lastkreis ist besonders vorteilhaft bei Schaltungsanordnungen für in Kraftfahrzeugscheinwerfern eingesetzte Hochdruckentladungslampen, weil diese Lampen während ihrer Anlaufphase mit einem besonders hohen Strom beaufschlagt werden, um die Anlaufphase zu verkürzen. Der Begriff Anlaufphase bezeichnet hier die Zeitspanne von der Zündung der Lampe bis zum Erreichen eines quasistationären Betriebszustandes, bei dem sich eine stabile Bogenentladung in der Lampe ausgebildet hat. Für eine Halogen-Metalldampf-Hochdruckentladungslampe mit einer elektrischen Leistungsaufname von ca. 35 W, wie sie üblicherweise in Kraftfahrzeugscheinwerfern benutzt wird, wird während der Zünd- und Anlaufphase für den Übergang von der Glimm- zur Bogenentladung am Resonanzkondensator vorteilhafterweise eine resonanzüberhöhte mittelfrequente Wechselspannung mit Spannungsamplituden zwischen 500 V und 1500 V bereitgestellt.

Als Spannungswandler wird vorteilhafterweise ein Gegentaktwandler mit zwei Schalttransistoren verwendet, der zusammen mit dem an seinem Ausgang angeschlossenen Transformator den Betrieb der Hochdruckentladungslampe an einer Niedervolt-Spannungsquelle ermöglicht, was insbesondere für Anwendungen der Hochdruckentladungslampe in Kraftfahrzeugscheinwerfern von Bedeutung ist. Mit Hilfe des Gegentaktwandlers und des Transformators wird die Niedervolt-Spannung, beispielsweise die Versorgungsspannung eines Kraftfahrzeug-Bordnetzes, die typischerweise eine 12 V- oder 24 V-Gleichspannung ist, in eine mittelfrequente Wechselspannung mit einer Spannungsamplitude von ca. 500 V auf der Sekundärseite des Transformators hochtransformiert. Die Frequenz dieser Wechselspannung beträgt vorteilhafterweise mehr als 200 kHz und liegt bevorzugt zwischen 500 kHz und 3 MHz. In diesem bevorzugten Frequenzbereich ist insbesondere für niederwattige Hochdruckentladungslampen, wie sie in Kraftfahrzeugen verwendet werden, ein besonders flimmerfreier Betrieb möglich. Außerdem kann in diesem Frequenzbereich eine ausreichende Funkentstörung der Schaltungsanordnung noch mit vertretbaren Mitteln gewährleistet werden.

Der an den Gegentaktwandler angeschlossene Transformator besitzt zwei Primärwicklungen, die abwechselnd im Schalttakt des Gegentaktwandlers vom Versorgungsstrom durchflossen werden. Parallel zu den Primärwicklungen dieses Transformators ist vorteilhafterweise ein Kondensator geschaltet, der mit den Primärwicklungen des Transformators einen Resonanzkreis bildet. Die Kapazität dieses Kondensators ist vorteilhafterweise derart auf die Induktivität des Transformators abgestimmt, daß bei hoher Schaltfrequenz des Gegentaktwandlers an diesem Kondensator eine sinusförmige Spannung entsteht. Dadurch können die Schaltverluste an den Transistoren des Gegentaktwandlers erheblich reduziert werden.

Um Störungen des Lampenbetriebs durch das Auftreten von longitudinalen akustischen Resonanzen im Entladungsmedium zu vermeiden, wird vorteilhafterweise eine Frequenzmodulation der vom Spannungswandler erzeugten Wechselspannung für die Hochdruckentladungslampe durchgeführt. Die Mitten- oder Trägerfrequenz der frequenzmodulierten Wechselspannung beträgt vorteilhafterweise mehr als 300 kHz und liegt bevorzugterweise zwischen 500 kHz und 2,9 MHz. Der Frequenzhub beträgt vorteilhafterweise 10 kHz bis 100 kHz und die Modulationsfrequenz liegt vorteilhafterweise zwischen 100 Hz und 5 kHz.

Das erfindungsgemäße Beleuchtungssystem besteht aus einer Hochdruckentladungslampe und dem dazugehörigen Betriebsgerät, wobei das Betriebsgerät eine Schaltungsanordnung enthält, die einen Spannungswandler, der eine Wechselspannung erzeugt, einen an den Spannungswandler angeschlossenen Transformator, der die vom Spannungswandler generierte Wechselspannung in den Lastkreis für die Hochdruckentladungslampe überträgt, eine Impuls-Zündvorrichtung für die Hochdruckentladungslampe und einen Serienresonanzkreis, dessen Resonanzkapazität parallel zur Entladungsstrecke der Hochdruckentladungslampe geschaltet ist, besitzt. Der an den Spannungswandler angeschlossene Transformator weist mindestens zwei Sekundärwicklungen auf, wobei die erste Sekundärwicklung an den Serienresonanzkreis und die zweite Sekundärwicklung an den Spannungseingang der Impuls-Zündvorrichtung angeschlossen ist.

Die zum erfindungsgemäßen Beleuchtungssystem gehörende Hochdruckentladungslampe weist zusätzlich zu den innerhalb ihres Entladungsgefäßes angeordneten Elektroden eine Zündhilfselektrode auf, die an den Zündspannungsausgang der Impuls-Zündvorrichtung angeschlossen ist und die zum Zünden der Hochdruckentladungslampe mit Hochspannungsimpulsen beaufschlagt wird. Die Zündhilfselektrode befindet sich vorteilhafterweise außerhalb des Entladungsgefäßes, so daß die Zündimpulse kapazitiv in die Lampe eingekoppelt werden. Vorteilhafterweise besteht die Zündhilfselektrode aus einer elektrisch leitfähigen Schicht, die auf einem Lampengefäß, vorzugsweise auf dem das Entladungsgefäß umgebenden Außenkolben der Hochdruckentladungslampe, aufgebracht ist. Bei in Kraftfahrzeugscheinwerfern verwendeten Hochdruckentladungslampen ist diese elektrisch leitfähige Schicht außerdem vorteilhafterweise auch als optische Blende zur Erzeugung des Abblendlichtes ausgebildet.

Nachstehend wird die Erfindung anhand zweier bevorzugter Ausführungsbeispiele näher erläutert. Es zeigen:
- Figur 1: Eine schematische Darstellung der erfindungsgemäßen Schaltungsanordnung
- Figur 2: Eine Seitenansicht einer Hochdruckentladungslampe mit Zündhilfselektrode zum Betrieb an der erfindungsgemäßen Schaltungsanordnung in schematischer Darstellung
- Figur 3: Eine schematische Darstellung der erfindungsgemäßen Schaltungsanordnung gemäß eines zweiten Ausführungsbeispiels

### IV. Bevorzugte Ausführungsbeispiele

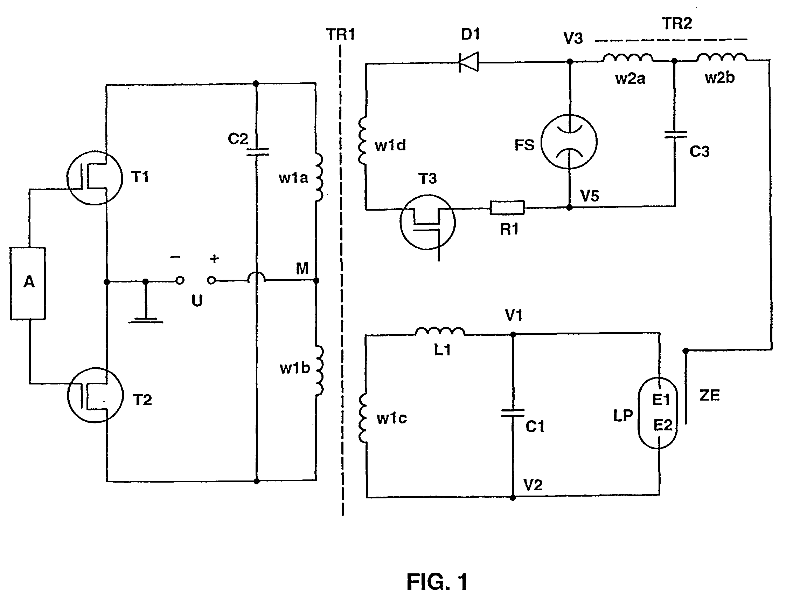

Die Figur 1 zeigt schematisch das Schaltungsprinzip der erfindungsgemäßen Schaltungsanordnung zum Betrieb einer Halogen-Metalldampf-Hochdruckentladungslampe mit einer elektrischen Leistungsaufnahme von ca. 35 W. Diese Schaltungsanordnung besitzt einen Gegentaktwandler, der an seinem Eingang von einer 12 V-Gleichspannungsquelle U gespeist wird, und einen Lastkreis, in den die zu betreibende Hochdruckentladungslampe geschaltet ist, sowie eine Impuls-Zündvorrichtung für die Hochdruckentladungslampe.

Der Gegentaktwandler wird im wesentlichen von zwei Feldeffekttransistoren T1, T2, ihrer Ansteuerungsvorrichtung A und einem Transformator TR1 mit zwei Primärwicklungen w1a, w1b und zwei Sekundärwicklungen w1c, w1d gebildet. Der geerdete Minuspol der Gleichspannungsquelle U ist mit den Source-Anschlüssen beider Feldeffekttransistoren T1, T2 verbunden. Der Pluspol der Gleichspannungsquelle U ist über einen Mittenabgriff M einerseits mit einem ersten Anschluß der ersten Primärwicklung w1a des Transformators TR1 und andererseits mit einem ersten Anschluß der zweiten Primärwicklung w1b des Transformators TR1 verbunden. Der zweite Anschluß der ersten Primärwicklung w1a ist mit dem Drain-Anschluß des ersten Feldeffekttransistors T1 verbunden und der zweite Anschluß der zweiten Primärwicklung w1b ist zum Drain-Anschluß des zweiten Feldeffekttransistors T2 geführt. Die erste Sekundärwicklung w1c ist in den Lastkreis geschaltet, während die zweite Sekundärwicklung w1d des Transformators TR1 an die Zündvorrichtung angeschlossen ist.

Der Lastkreis enthält neben der Sekundärwicklung w1c noch eine Resonanzinduktivität L1, einen Resonanzkondensator C1 und zwei Anschlüsse für die zu betreibende Hochdruckentladungslampe LP. Die Resonanzinduktivität L1 und der Resonanzkondensator C1 bilden einen Serienresonanzkreis, der von der Sekundärwicklung w1c des Transformators TR1 mit einer mittelfrequenten Wechselspannung versorgt wird. Die Halogen-Metalldampf-Hochdruckentladungslampe LP ist derart an den Lastkreis angeschlossen, daß die durch ihre Hauptelektroden E1, E2 definierte Entladungsstrecke parallel zum Resonanzkondensator C1 geschaltet ist. Ein Anschluß der ersten Sekundärwicklung w1c ist über die Resonanzinduktivität L1 und den Verzweigungspunkt V1 mit einem Anschluß des Resonanzkondensators C1 und mit der Elektrode E1 der Hochdruckentladungslampe LP verbunden. Der andere Anschluß der ersten Sekundärwicklung w1c ist über den Verzweigungspunkt V2 mit dem anderen Anschluß des Resonanzkondensators C1 und mit der Elektrode E2 der Hochdruckentladungslampe LP verbunden.

Die Impuls-Zündvorrichtung wird von einer Funkenstrecke FS, einem Stoßkondensator C3, einem Impulstransformator TR2, einer Gleichrichterdiode D1, einem ohmschen Widerstand R1, einem Feldeffekttransistor T3 und der zweiten Sekundärwicklung w1d des Transformators TR1 gebildet. Ein erster Anschluß der zweiten Sekundärwicklung w1d ist mit der Kathode der Gleichrichterdiode D1 verbunden. Die Anode der Gleichrichterdiode D1 ist über den Verzweigungspunkt V3 einem ersten Anschluß der Funkenstrecke FS und mit einem ersten Anschluß der Primärwicklung w2a des Impulstransformators TR2 verbunden. Der zweite Anschluß der Primärwicklung w2a ist über den Verzweigungspunkt V4 an einen ersten Anschluß der Sekundärwicklung w2b des Impulstransformators TR2 und an einen Anschluß des Stoßkondensators C3 angeschlossen. Der andere Anschluß des Stoßkondensators C3 ist über den Verzweigungspunkt V5 mit dem zweiten Anschluß der Funkenstrecke FS und mit dem ohmschen Widerstand R1 verbunden. Der Verzweigungspunkt V5 liegt auf dem gleichen elektrischen Potential wie der Verzweigungspunkt V2. Der ohmsche Widerstand R1 ist über die Source-Drain-Strecke des Feldeffekttransistors T3 mit dem zweiten Anschluß der zweiten Sekundärwicklung w1d des Transformators TR1 verbunden. Der zweite Anschluß der Sekundärwicklung w2b des Impulstransformators TR2 bildet den Zündspannungsausgang der Impuls-Zündvorrichtung. Er ist an die Zündhilfselektrode ZE der Hochdruckentladungslampe LP angeschlossen.

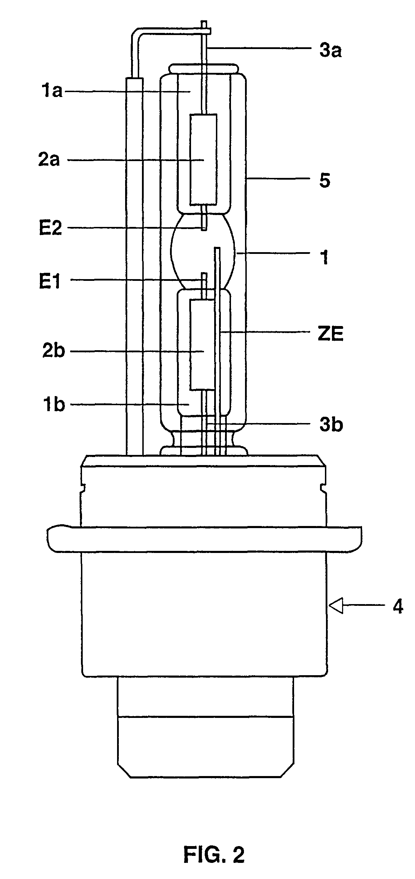

Bei der in Figur 2 abgebildeten Hochdruckentladungslampe LP handelt es sich um eine einseitig gesockelte Halogen-Metalldampf-Hochdruckentladungslampe LP mit einer elektrischen Leistungsaufnahme von ca. 35 W. Sie bildet zusammen mit einem darauf abgestimmten Betriebsgerät, das die in Figur 1 dargestellte erfindungsgemäße Schaltungsanordnung aufweist, ein für einen Kraftfahrzeugscheinwerfer verwendbares Beleuchtungssystem. Die Lampe LP besitzt ein Entladungsgefäß 1 aus Quarzglas, in dem eine ionisierbare Füllung gasdicht eingeschlossen ist. Die ionisierbare Füllung enthält Xenon und Metallhalogenidverbindungen. Die beiden Enden 1a, 1b des Entladungsgefäßes 1 sind jeweils mittels einer Molybdänfolien-Einschmelzung 2a, 2b abgedichtet. Im Innenraum des Entladungsgefäßes 1 befinden sich zwei Elektroden E1, E2, zwischen denen sich während des Lampenbetriebes der für die Lichtemission verantwortliche Entladungsbogen ausbildet. Diese Hauptelektroden E1, E2 sind jeweils über eine der MolybdänfolienEinschmelzungen 2a, 2b elektrisch leitend mit einer Stromzuführung 3a, 3b des Lampensockels 4 verbunden. Das Entladungsgefäß 1 wird von einem gläsernen Außenkolben 5 umhüllt. Eine detaillierte Beschreibung des Aufbaus dieser Lampe LP findet man beispielsweise in der Offenlegungsschrift EP 0 696 046. Die Zündhilfselektrode ZE wird hier bei diesem Ausführungsbeispiel der Erfindung von einer dünnen metallischen Beschichtung auf der äußeren Oberfläche des Außenkolbens 5 gebildet. Die dünne metallische Beschichtung ZE besitzt die Form eines langgestreckten Streifens, der sich vom sockelnahen Ende des Außenkolbens 5 ungefähr bis auf die Höhe des Entladungsgefäßmittelpunktes erstreckt, so daß das sockelferne Ende der Zündhilfselektrode ZE annähernd gleich weit von beiden Elektroden E1, E2 entfernt ist.

Die von der Ansteuerungsvorrichtung A angesteuerten Feldeffekttransistoren T1, T2 schalten alternierend mit einer Schaltfrequenz von ungefähr 800 kHz, so daß - ohne Berücksichtigung des Kondensators C2 - die beiden Primärwicklungen w1a, w1b des Transformators TR1 abwechselnd mit der 12 V-Gleichspannungsquelle U verbunden sind. Durch die Primärwicklungen w1a, w1b fließt daher ein Wechselstrom, dessen Frequenz mit der Schaltfrequenz des Gegentaktwandlers übereinstimmt. Die Kapazität des Kondensators C2 ist so auf die Induktivität der Primärwicklungen w1a, w1b abgestimmt, daß die Primärwicklungen w1a, w1b und der Kondensator C2 bei der Schaltfrequenz des Gegentaktwandlers T1, T2 einen Resonanzkreis bilden, mit dessen Hilfe die in den Feldeffekttransistoren T1, T2 auftretenden Schaltverluste reduziert werden. Die am Kondensator C2 abfallende Spannung ist nahezu sinusförmig. Der Spannungsverlauf an den Primärwicklungen w1a, w1b beschreibt jeweils eine Sinushalbschwingung, deren Spitzenwert aufgrund der Resonanzüberhöhung ungefähr 24 V beträgt. Beide Primärwicklungen w1a, w1b sind induktiv an beide Sekundärwicklungen w1c, w1d des Transformators TR1 gekoppelt. Die Primärwicklungen w1a, w1b besitzen jeweils 3 Windungen und die Sekundärwicklungen w1c, w1d jeweils 40 Windungen, so daß die vom Gegentaktwandler T1, T2 generierte Wechselspannung mit einem Übersetzungsverhältnis von annähernd 13:1 mittels der ersten Sekundärwicklung w1c in den Lastkreis und mittels der zweiten Sekundärwicklung w1d in die Impuls-Zündvorrichtung übertragen wird. Die in den Sekundärwicklungen w1c, w1d induzierten Spitzenspannungen betragen ungefähr 500 V. Die Frequenzen der Induktionsspannungen im Lastkreis und in der Zündvorrichtung stimmen mit der Frequenz der vom Gegentaktwandler T1, T2 erzeugten Wechselspannung überein.

Zum Zünden der Halogen-Metalldampf-Hochdruckentladungslampe LP wird mittels des Schalttransistors T3 die Impuls-Zündvorrichtung aktiviert. Dazu wird das Gate des Feldeffekttransistors T3 von einem integrierten Schaltkreis (nicht abgebildet), insbesondere einer Timer-Schaltung, angesteuert. Bei durchgeschaltetem Transistor T3 lädt sich der Stoßkondensator C3 über die Gleichrichterdiode D1 und die Primärwicklung w2a des Impulstransformators TR2 auf, um sich dann jeweils beim Erreichen der Durchbruchsspannung der Funkenstrecke FS stoßweise wieder zu entladen. Die stoßweise auftretenden Entladungsströme des Kondensators C3 fließen durch die Primärwicklung w2a des Impulstransformators TR2 und werden von der Sekundärwicklung w2b in Hochspannungsimpulse umgewandelt, die der Zündhilfselektrode ZE der Halogen-Metalldampf-Hochdruckentladungslampe LP zugeführt und kapazitiv in die Lampe LP eingekoppelt werden. Diese von der Sekundärwicklung w2b an die Zündhilfselektrode ZE übertragenen Hochspannungs-Zündimpulse sind unipolar und in diesem Ausführungsbeispiel positiv gepolt. Sie erreichen Spitzenwerte von ca. 30 kV. Da der Stoßkondensator C3 und die Primärwicklung w2a als Schwingkreis ausgebildet sind, wird bei jeder Entladung des Kondensators C3 nicht nur ein Zündspannungsimpuls erzeugt, sondern eine ganze Kaskade von Hochspannungsimpulsen für die Zündhilfselektrode ZE ausgelöst.

Die erste Sekundärwicklung w1c des Transformators TR1 versorgt den Lastkreis, der die Resonanzkreisbauteile L1, C1 und Anschlüsse für die Hochdruckentladungslampe LP enthält, mit einer Eingangsspannung von ca. 500 V. Mittels des Serienresonanzkreises L1, C1 wird eine Resonanzüberhöhung dieser Eingangsspannung von ca. 500 V bis 1500 V erzielt. Die in dem Resonanzkreis L1, C1 gespeicherte Energie wird der Lampe LP unmittelbar nach ihrer Zündung als Übernahme-Energie zur Verfügung gestellt, um einen schnellen Anlauf der Lampe und insbesondere einen schnellen Übergang von der Glimm- in die Bogenentladung zu gewährleisten. Die Resonanzkreisbauelemente C1, L1 sind so dimensioniert, daß die verfügbare Übernahme-Energie optimal auf die zu betreibende Lampe LP abgestimmt ist. Bei dem hier erläuterten Ausführungsbeispiel einer 35W-Halogen-Metalldampf-Hochdruckentladungslampe besitzt der Resonanzkondensator C1 eine Kapazität von 330 pF und die Resonanzinduktivität L1 eine Induktivität von 50 µH, so daß sich für den Serienresonanzkreis L1, C1 eine Resonanzfrequenz von 1,2 MHz ergibt. Bereits während der Zünd- und Anlaufphase der Lampe LP wird ihre Versorgungsspannung, das heißt, die über ihren Elektroden E1, E2 abfallende Spannung, frequenzmoduliert. Die Trägerfrequenmz und der Frequenzhub sowie die Modulationsfrequenz sind so gewählt, daß die verfügbare Übernahme-Energie optimal auf die zu betreibende Lampe LP abgestimmt ist.

Nach Beendigung der Zünd- und Anlaufphase der Halogen-Metalldampf-Hochdruckentladungslampe LP wird die Lampe mit einer frequenzmodulierten Wechselspannung betrieben. Die Trägerfrequenz oder Mittenfrequenz dieser frequenzmodulierten Wechselspannung beträgt ca. 800 kHz und der Frequenzhub ungefähr 100 kHz, so daß die Frequenz der Lampenbetriebsspannung periodisch zwischen 700 kHz und 900 kHz variiert. Die Modulationsfrequenz beträgt ca. 1,5 kHz. Das Modulationssignal ist dreieckförmig. Durch die Modulation wird ein flimmerfreier stabiler Entladungsbogen erreicht.

Die Frequenzmodulation der Wechselspannung wird mit Hilfe eines zur Ansteuerungsvorrichtung A gehörenden Frequenzgenerator (nicht abgebildet) durchgeführt. Da die Ansteuerungsvorrichtung A für das Verständnis der vorliegenden Erfindung unwesentlich ist, soll diese hier nicht näher erläutert werden. Die Ansteuerungsvorrichtung kann beispielsweise mit Hilfe eines integrierten Schaltkreises realisiert werden, dessen Ausgang mit den Gate-Anschlüssen der Feldeffekttransistoren T1, T2 verbunden ist und der die Zeitabläufe aller Prozesse in der gesamten Schaltungsanordnung steuert. Üblicherweise ermöglicht die Ansteuerungsvorrichtung A auch eine Leistungsregelung der Lampe LP mittels einer Pulsweitenmodulation des Steuersignals für die Feldeffekttransistoren T1, T2 des Gegentaktwandlers. Die Ansteuerungsvorrichtung A kann aber auch mit Hilfe eines zusätzlichen Transformators erfolgen, wie das beispielsweise in den europäischen Patentanmeldungen EP 0 294 604 und EP 0 294 605 offenbart ist.

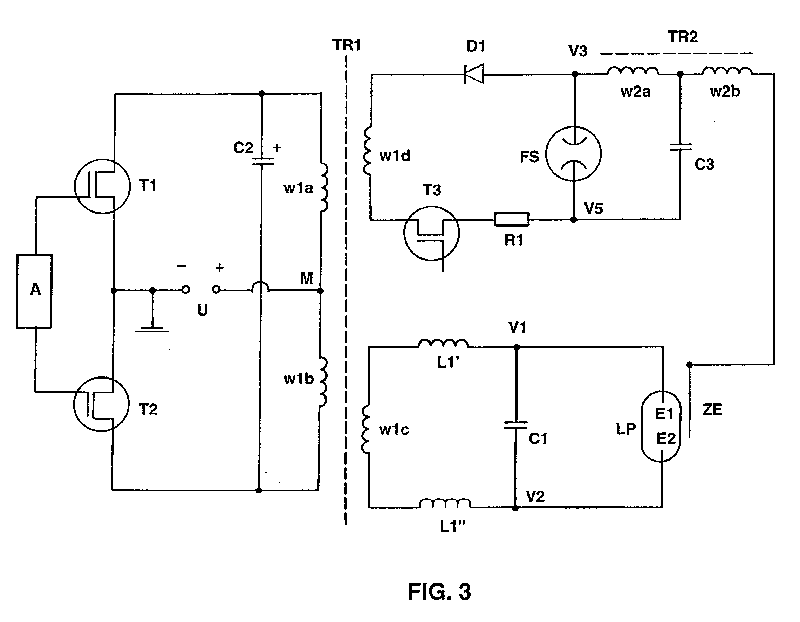

Die Figur 3 zeigt ein zweites Ausführungsbeispiel der erfindungsgemäßen Schaltungsanordnung. Dieses zweite Ausführungsbeispiel unterscheidet sich vom ersten Ausführungsbeispiel nur durch die im Lastkreis angeordnete Resonanzinduktivität, die beim zweiten Ausführungsbeispiel von zwei gleich großen Induktivitäten L1', L1" gebildet wird. Aus diesem Grund wurden in den Figuren 1 und 3 für identische Bauteile dieselben Bezugszeichen gewählt. Beim zweiten Ausführungsbeispiel sind die Bauteile L1', L1", C1 des Serienresonanzkreises symmetrisch bezüglich der Lampenelektroden E1, E2 angeordnet. Das heißt, ein erster Anschluß der ersten Resonanzinduktivität L1' ist mit einem ersten Anschluß der ersten Sekundärwicklung w1c des Transformators TR1 verbunden, während ihr zweiter Anschluß über den Verbindungspunkt V1 mit der ersten Lampenelektrode E1 und mit einem ersten Anschluß des Resonanzkondensators C1 verbunden ist. Analog dazu ist der erste Anschluß der zweiten Resonanzinduktivität L1" mit dem zweiten Anschluß der ersten Sekundärwicklung w1c und ihr zweiter Anschluß über den Verbindungspunkt V2 mit der zweiten Lampenelektrode E2 und mit dem zweiten Anschluß des Resonanzkondensators C1 verbunden. Dadurch wird, insbesondere während der Anlaufphase der Hochdruckentladungslampe LP, in der der Übergang von der Glimm- zur Bogenentladung erfolgt, die im Serienresonanzkreis L1', L1", C1 gespeicherte Energie symmetrisch über beide Lampenelektroden E1, E2 in die Hochdruckentladungslampe LP eingekoppelt. Der Aufbau und die Funktionsweise des zweiten Ausführungsbeispiels stimmen in allen anderen Teilen mit dem Aufbau und der Funktionsweise des ersten Ausführungsbeispiels überein.

Die Erfindung beschränkt sich nicht auf die oben näher beschriebenen Ausführungsbeispiele. Beispielsweise kann zwischen der Niedervolt-Spannungsquelle U und dem Eingang des Gegentaktwandlers noch ein Hochfrequenzfilter geschaltet sein, das eine Funkentstörung der erfindungsgemäßen Schaltungsanordnung bewirkt und die Rückwirkung der vom Gegentaktwandler generierten hoch- bzw. mittelfrequenten Schwingung auf die Spannungsquelle erheblich vermindert. Ferner kann anstelle eines Gegentaktwandlers auch ein anderer Spannungswandler verwendet werden. Die Zündvorrichtung kann statt einer Funkenstrecke auch einen anderen automatischen Schalter, beispielsweise eine Vierschichtdiode, einen Triac oder ein anderes als Schwellwertschalter ausgebildetes Halbleiterbauteil aufweisen. Außerdem kann der Schalttransistor T3 der Zündvorrichtung auch durch ein Relais ersetzt werden.

Es ist aber auch möglich, den Transistor T3 zwischen der Diode D1 und dem Verzweigungspunkt V3 in die Zündvorrichtung zu schalten und dabei die Diode D1 so zu polen, daß ihre Anode mit der Sekundärwicklung w1d und ihre Kathode mit dem Drain-Anschluß des Transistors T3 verbunden ist. Der Verzweigungspunkt V5 ist dann über den Widerstand R1 mit der Sekundärwicklung w1d verbunden.

Für die Zündhilfselektrode ZE der Hochdruckentladungslampe sind ebenfalls verschiedene Ausführungsformen möglich. Beispielsweise kann die Zündhilfselektrode auch als dünne metallische Beschichtung auf der Innenseite des Außenkolbens oder auf der Außenseite des Entladungsgefäßes ausgebildet sein. Ferner kann die in Figur 2 dargestellte streifenartige Zündhilfselektrode ZE auf der Außenseite des Außenkolbens auch verbreitet und derart ausgeformt werden, daß sie zugleich auch als optische Blende oder Abschatter zur Erzeugung des Abblendlichts dienen kann. Schließlich ist es auch möglich, die Zündhilfselektrode aus einem Draht zu fertigen, der sich parallel zur Lampenlängsachse innerhalb oder außerhalb des Außenkolbens erstreckt, oder der um das Entladungsgefäß geschlungen ist.

Grundsätzlich muß das aus der Hochdruckentladungslampe LP und der erfindungsgemäßen Schaltungsanordnung bestehende Beleuchtungssystem nicht unbedingt Bestandteil eines Kraftfahrzeugscheinwerfers sein. Es kann auch für andere Anwendungen, beispielsweise für Projektoren oder andere Foto-Optik-Anwendungen, genutzt werden. In diesem Fall stammt die Versorgungsspannung U nicht vom Bordnetz eines Kraftfahrzeugs. Es kann sich dann bei der Versorgungsspannung U auch um die gleichgerichtete Wechselspannung einer Wechselspannungsquelle handeln.

## Patentansprüche

1. Schaltungsanordnung zum Betrieb einer Hochdruckentladungslampe mit einer elektrischen Leistungsaufnahme kleiner oder gleich 100 W,
- einem Spannungswandler (T1, T2), der eine Wechselspannung erzeugt,
- einem Transformator (TR1), der an den Spannungswandler (T1, T2) angeschlossen ist,
- einer Impuls-Zündvorrichtung für die Hochdruckentladungslampe, wobei die Impuls-Zündvorrichtung einen Spannungseingang und einen Zündspannungsausgang besitzt,
- einem als Serienresonanzkreis ausgebildeten Lastkreis, in den die Hochdruckentladungslampe (LP) geschaltet ist und der mindestens eine Resonanzinduktivität (L1) und mindestens einen Resonanzkondensator (C1) enthält,
- der Transformator (TR1) mindestens zwei Sekundärwicklungen (wlc, w1d) besitzt, wobei die erste Sekundärwicklung (wlc) in den Lastkreis geschaltet ist und die zweite Sekundärwicklung (wld) an den Spannungseingang der Impuls-Zündvorrichtung angeschlossen ist,
**dadurch gekennzeichnet, daß**
- der Zündspannungsausgang der Impuls-Zündvorrichtung zum Anschluß an eine Zündhilfselektrode (ZE) der Hochdruckentladungslampe (LP) vorgesehen ist,
- die Resonanzfrequenz des unbelasteten Serienresonanzkreises zwischen 500 kHz und 3 MHz liegt.

2. Schaltungsanordnung nach Anspruch 1, **dadurch gekennzeichnet, daß** die Impuls-Zündvorrichtung einen Stoßkondensator (C3), einen Impulstransformator (TR2) und einen automatischen Schalter (FS) enthält.

3. Schaltungsanordnung nach Anspruch 2, **dadurch gekennzeichnet, daß** der automatische Schalter (FS) eine Funkenstrecke ist.

4. Schaltungsanordnung nach Anspruch 2, **dadurch gekennzeichnet, daß** der automatische Schalter ein als Schwellwertschalter ausgebildetes Halbleiterbauteil ist.

5. Schaltungsanordnung nach Anspruch 1, **dadurch gekennzeichnet, daß** die Zündvorrichtung einen Gleichrichter (Dl) enthält.

6. Schaltungsanordnung nach Anspruch 1, **dadurch gekennzeichnet, daß** der Spannungswandler (T1, T2) ein Gegentaktwandler ist.

7. Schaltungsanordnung nach Anspruch 6, **dadurch gekennzeichnet, daß**
- der Gegentaktwandler zwei Schalttransistoren (T1, T2) aufweist,
- der Transformator (TR1) des Gegentaktwandlers (T1, T2) zwei Primärwicklungen (w1a, w1b) mit jeweils zwei Anschlüssen besitzt,
- der erste Anschluß der ersten Primärwicklung über einen Mittenabgriff (M) mit dem ersten Anschluß der zweiten Primärwicklung (w1b) verbunden ist,
- der zweite Anschluß der ersten Primärwicklung (w1a) an den ersten Schalttransistor (T1) angeschlossen ist,
- der Mittenabgriff für den Anschluß an den positiven Pol einer Gleichspannungsversorgung (U) vorgesehen ist,
- der zweite Anschluß der zweiten Primärwicklung (w1b) an den zweiten Schalttransistor (T2) angeschlossen ist,
- der Gegentaktwandler (T1, T2) mindestens einen Resonanzkondensator (C2) aufweist, wobei ein Anschluß des mindestens einen Resonanzkondensators (C2) mit dem ersten Anschluß der ersten Primärwicklung (w1a) und der andere Anschluß des mindestens einen Resonanzkondensators (C2) mit dem zweiten Anschluß der zweiten Primärwicklung (w1b) verbunden ist.

8. Betriebsverfahren für ein Beleuchtungssystem, das ein Betriebsgerät mit einer Schaltungsanordnung gemäß Anspruch 1 und eine Hochdruckentladungslampe mit einer Nennleistung kleiner oder gleich 100 W, mit einer mit dem Zündspannungsausgang der Impuls-Zündvorrichtung elektrisch leitend verbundenen Zündhilfselektrode (ZE) und mit einem Entladungsgefäß (1) mit darin angeordneten Lampenelektroden (E1, E2), zwischen denen sich während des Lampenbetriebs eine Gasentladung ausbildet, aufweist, **dadurch gekennzeichnet, daß**
- zum Zünden der Hochdruckentladungslampe (LP) ihre Zündhilfselektrode (ZE) mittels des Spannungswandlers (T1, T2) und der an den Spannungseingang der Impuls-Zündvorrichtung angeschlossenen zweiten Sekundärwicklung (wld) des an den Spannungswandler angeschlossenen Transformators (TR1) sowie mittels der Impulszündvorrichtung mit Hochspannungsimpulsen beaufschlagt wird,
- während der Zündphase der Hochdruckentladungslampe (LP) und während der darauf folgenden Übergangsphase von der Glimmentladung zur Bogenentladung mittels des Spannungswandlers (T1, T2) und mittels der an den Serienresonanzkreis (C1, L1) angeschlossenen und den den Serienresonanzkreis (C1, L1) mit einer Wechselspannung versorgenden ersten Sekundärwicklung (wlc) des an den Spannungswandler angeschlossenen Transformators (TR1) durch Anwendung der Methode der Resonanzüberhöhung am parallel zur Entladungsstrecke der Hochdruckentladungslampe (LP) geschalteten Resonanzkondensator (C1) eine resonanzüberhöhte Wechselspannung für die Hochdruckentladungslampe (LP) bereitgestellt wird und die im Serienresonanzkreis (C1, L1) gespeicherte Energie über die Lampenelektroden (E1, E2) in die Hochdruckentladungslampe (LP) eingekoppelt wird,
- die Hochdruckentladungslampe nach Beendigung der Übergangsphase von der Glimm- zur Bogenentladung durch den Spannungswandler (T1, T2) und die erste Sekundärwicklung (wlc) des Transformators (TR1) mit einer frequenzmodulierten Wechselspannung betrieben wird,
- die Frequenz der Wechselspannung auf der Sekundärseite (wlc, wld) des Transformators (TR1) zwischen 500 kHz und 3 MHz liegt.

9. Betriebsverfahren nach Anspruch 8, **dadurch gekennzeichnet, daß** die Hochdruckentladungslampe (LP) eine Halogen-Metalldampf-Hochdruckentladungslampe ist und die Amplitude der am Resonanzkondensator (C1) des Serienresonanzkreises (L1, C1) mittels Resonanzüberhöhung erzeugten Wechselspannung zwischen 500 V und 1,5 kV beträgt.

10. Betriebsverfahren nach Anspruch 8, **dadurch gekennzeichnet, daß** die Trägerfrequenz der frequenzmodulierten Wechselspannung zwischen 500 kHz und 2,9 MHz beträgt.

11. Betriebsverfahren nach Anspruch 8, **dadurch gekennzeichnet, daß** der Frequenzhub der frequenzmodulierten Wechselspannung 10 kHz bis 100 kHz beträgt.

12. Betriebsverfahren nach Anspruch 8, **dadurch gekennzeichnet, daß** die Modulationsfrequenz der Wechselspannung 100 Hz bis 5 kHz beträgt.

13. Betriebsverfahren nach Anspruch 8, **dadurch gekennzeichnet, daß** die Schaltungsanordnung von einer Niedervolt-Spannungsquelle versorgt wird.

14. Betriebsverfahren nach Anspruch 13, **dadurch gekennzeichnet, daß** die Niedervolt-Spannungsquelle eine Gleichspannungsquelle ist.

15. Betriebsverfahren nach Anspruch 13, **dadurch gekennzeichnet, daß** die Versorgungsspannung der Niedervolt-Spannungsquelle kleiner als 50 V ist.

## Claims

1. Circuit arrangement for operating a high-pressure discharge lamp having an electric power consumption of less than or equal to 100 W,
- a voltage converter (T1, T2) which generates an AC voltage,
- a transformer (TR1) which is connected to the voltage converter (T1, T2),
- a pulse ignition device for the high-pressure discharge lamp, the pulse ignition device having a voltage input and an igniting voltage output,
- a load circuit, which is designed as a series resonant circuit and into which the high-pressure discharge lamp (LP) is switched and which contains at least one resonance inductor (L1) and at least one resonance capacitor (C1), and
- the transformer (TR1) has at least two secondary windings (w1c, w1d), the first secondary winding (w1c) being switched into the load circuit, and the second secondary winding (w1d) being connected to the voltage input of the pulse ignition device,
**characterized in that**
- the igniting voltage output of the pulse ignition device is provided for connection to an auxiliary ignition electrode (ZE) of the high-pressure discharge lamp (LP), and
- the resonant frequency of the unloaded series resonant circuit is between 500 kHz and 3 MHz.

2. Circuit arrangement according to Claim 1, **characterized in that** the pulse ignition device contains a surge capacitor (C3), a pulse transformer (TR2) and an automatic switch (FS).

3. Circuit arrangement according to Claim 2, **characterized in that** the automatic switch (FS) is a spark gap.

4. Circuit arrangement according to Claim 2, **characterized in that** the automatic switch is a semiconductor component designed as a threshold-value switch.

5. Circuit arrangement according to Claim 1, **characterized in that** the ignition device contains a rectifier (D1).

6. Circuit arrangement according to Claim 1, **characterized in that** the voltage converter (T1, T2) is a push-pull converter.

7. Circuit arrangement according to Claim 6, **characterized in that**
- the push-pull converter has two switching transistors (T1, T2),
- the transformer (TR1) of the push-pull converter (T1, T2) has two primary windings (w1a, w1b) each with two terminals,
- the first terminal of the first primary winding is connected via a centre tap (M) to the first terminal of the second primary winding (w1b),
- the second terminal of the first primary winding (w1a) is connected to the first switching transistor (T1),
- the centre tap is provided for connection to the positive pole of a direct voltage supply (U),
- the second terminal of the second primary winding (w1b) is connected to the second switching transistor (T2), and
- the push-pull converter (T1, T2) has at least one resonance capacitor (C2), one terminal of the at least one resonance capacitor (C2) being connected to the first terminal of the first primary winding (w1a), and the other terminal of the at least one resonance capacitor (C2) being connected to the second terminal of the second primary winding (w1b).

8. Operating method for a lighting system which has an operating device with a circuit arrangement in accordance with Claim 1 and a high-pressure discharge lamp with a nominal power of less than or equal to 100 W, with an auxiliary ignition electrode (ZE) which is connected in an electrically conducting fashion to the igniting voltage output of the pulse ignition device, and with a discharge vessel (1) in which there are arranged lamp electrodes (E1, E2) between which a gas discharge forms during lamp operation, **characterized in that**
- in order to ignite the high-pressure discharge lamp (LP), high-voltage pulses are applied to its auxiliary ignition electrode (ZE) by means of the voltage converter (T1, T2), and the second secondary winding (w1d), connected to the voltage input of the pulse ignition device, of the transformer (TR1) connected to the voltage converter, as well as by means of the pulsed ignition device,
- during the ignition phase of the high-pressure discharge lamp (LP) and during the transition phase, following thereupon, from the glow discharge to the arc discharge by means of the voltage converter (T1, T2) and by means of the first secondary winding (w1c), connected to the series resonant circuit (C1, L1) and supplying the series resonant circuit (C1, L1) with an AC voltage, of the transformer (TR1) connected to the voltage converter, an AC voltage of increased resonance is provided for the high-pressure discharge lamp (LP) by applying the method of resonance increase to the resonance capacitor (C1) connected in parallel with the discharge arc of the high-pressure discharge lamp (LP), and the energy stored in the series resonant circuit (C1, L1) is coupled into the high-pressure discharge lamp (LP) via the lamp electrodes (E1, E2),
- upon termination of the transition phase from the glow discharge to the arc discharge by means of the voltage converter (T1, T2) and the first secondary winding (w1c) of the transformer (TR1), the high-pressure discharge lamp is operated with a frequency-modulated AC voltage, and
- the frequency of the AC voltage on the secondary side (w1c, w1d) of the transformer (TR1) is between 500 kHz and 3 MHz.

9. Operating method according to Claim 8, **characterized in that** the high-pressure discharge lamp (LP) is a halogen metal vapour high-pressure discharge lamp, and the amplitude of the AC voltage generated across the resonance capacitor (C1) of the series resonant circuit (L1, C1) by means of resonance increase is between 500 V and 1.5 kV.

10. Operating method according to Claim 8, **characterized in that** the carrier frequency of the frequency-modulated AC voltage is between 500 kHz and 2.9 MHz.

11. Operating method according to Claim 8, **characterized in that** the frequency deviation of the frequency-modulated AC voltage is 10 kHz to 100 kHz.

12. Operating method according to Claim 8, **characterized in that** the modulation frequency of the AC voltage is 100 Hz to 5 kHz.

13. Operating method according to Claim 8, **characterized in that** the circuit arrangement is supplied by a low-voltage voltage source.

14. Operating method according to Claim 13, **characterized in that** the low-voltage voltage source is a DC voltage source.

15. Operating method according to Claim 13, **characterized in that** the power supply of the low-voltage voltage source is lower than 50 V.

## Revendications

1. Montage pour faire fonctionner une lampe à décharge à haute pression ayant une puissance électrique inférieure ou égale à 100 W,
- comportant un convertisseur (T1, T2) de tension qui produit une tension alternative,
- comportant un transformateur (TR1) qui est raccordé au convertisseur (T1, T2) de tension,
- comportant un dispositif d'amorçage à impulsion pour la lampe à décharge à haute pression, le dispositif d'amorçage à impulsion ayant une entrée de tension et une sortie de tension d'amorçage,
- comportant un circuit de charge, qui est réalisé en circuit résonnant série, dans lequel la lampe (LP) à décharge à haute pression est branchée et qui contient au moins une inductance (L1) à résonance et au moins un condensateur (C1) de résonance,
- le transformateur (TR1) a au moins deux enroulements (w1c, w1d) secondaires, le premier enroulement (w1c) secondaire étant branché dans le circuit de charge et le deuxième enroulement (w1d) secondaire étant raccordé à l'entrée de tension du dispositif d'amorçage à impulsion,
**caractérisé en ce que**
- la sortie de la tension d'amorçage du dispositif d'amorçage à impulsion est prévue pour le raccordement à une électrode (ZE) auxiliaire d'amorçage de la lampe (LP) à décharge à haute pression,
- la fréquence de résonance du circuit résonnant série non chargé est comprise entre 500 kHz et 3 MHz.

2. Montage suivant la revendication 1, **caractérisé en ce que** le dispositif d'amorçage à impulsion contient un condensateur (C3) de choc, un transformateur (TR2) d'impulsion et un commutateur (FS) automatique.

3. Montage suivant la revendication 2, **caractérisé en ce que** le commutateur (FS) automatique est un éclateur.

4. Montage suivant la revendication 2, **caractérisé en ce que** le commutateur automatique est un composant à semi-conducteur réalisé en commutateur à valeur seuil.

5. Montage suivant la revendication 1, **caractérisé en ce que** le dispositif d'amorçage contient un redresseur (D1).

6. Montage suivant la revendication 1, **caractérisé en ce que** le convertisseur (T1, T2) de tension est un convertisseur push-pull.

7. Montage suivant la revendication 6, **caractérisé en ce que**
- le convertisseur push-pull contient deux transistors (T1, T2) de commutation,
- le transformateur (TR1) du convertisseur (T1, T2) push-pull contient deux enroulements (w1a, w1b) primaires ayant respectivement deux bornes,
- la première borne du premier enroulement primaire est reliée par l'intermédiaire d'une prise (M) médiane à la première borne du deuxième enroulement (w1 b) primaire,
- la deuxième borne du premier enroulement (w1a) primaire est raccordée au premier transistor (T1) de commutation,
- la prise médiane est prévue pour le raccordement au pôle positif d'une alimentation (U) en tension continue,
- la deuxième borne du deuxième enroulement (w1b) primaire est raccordée au deuxième transistor (T2) de commutation,
- le convertisseur (T1, T2) push-pull comporte au moins un condensateur (C2) de résonance, une borne du au moins un condensateur (C2) de résonance étant reliée à la première borne du premier enroulement (w1 a) primaire et l'autre borne du au moins un condensateur (C2) de résonance étant reliée à la deuxième borne du deuxième enroulement (w1b) primaire.

8. Procédé pour faire fonctionner un système d'éclairage, qui comporte un appareil d'alimentation comportant un montage suivant la revendication 1 et une lampe à décharge à haute pression ayant une puissance nominale inférieure ou égale à 100 W, comportant une électrode (ZE) auxiliaire d'amorçage reliée de manière conductrice de l'électricité à la sortie de tension d'amorçage du dispositif d'amorçage à impulsion et comportant une enceinte (1) de décharge ayant des électrodes (E1, E2) de lampe qui y sont montées et entre lesquelles une décharge dans un gaz se forme pendant le fonctionnement de la lampe, **caractérisé en ce que**
- pour amorcer la lampe (LP) à décharge à haute pression, son électrode (ZE) auxiliaire d'amorçage est alimentée en impulsions haute tension au moyen du convertisseur (T1, T2) de tension et du deuxième enroulement (w1b) secondaire, raccordé à l'entrée de tension du dispositif d'amorçage à impulsion, du transformateur (TR1) raccordé au convertisseur de tension, ainsi qu'au moyen du dispositif d'amorçage à impulsion,
- pendant la phase d'amorçage de la lampe (LP) à décharge à haute pression et pendant la phase de passage, qui vient ensuite, de la décharge luminescente à la décharge en arc, il est mis à disposition, au moyen du convertisseur (T1, T2) de tension et au moyen du premier enroulement (w1c) secondaire, raccordé au circuit (C1, L1) résonnant série et alimentant en une tension alternative le circuit (C1, L1) résonnant série, du transformateur (TR1) raccordé au convertisseur de tension, en utilisant le procédé de l'amplification de résonance sur le condensateur (C1) de résonance branché en parallèle à la section de décharge de la lampe à décharge à haute pression, une tension alternative amplifiée en résonance pour la lampe (LP) à décharge à haute pression et l'énergie accumulée dans le circuit (C1, L1) résonnant série est injecté par l'intermédiaire des électrodes (E1, E2) de lampe dans la lampe (LP) à décharge à haute pression,
- après achèvement de la phase de passage de la décharge luminescente à la décharge en arc, on fait fonctionner la lampe à décharge à haute pression par le convertisseur (T1, T2) de tension et le premier enroulement (w1c) secondaire du transformateur (TR1) à une tension alternative modulée en fréquence,
- la fréquence de la tension alternative du côté secondaire (w1c, w1b) du transformateur (TR1) est comprise entre 500 kHz et 3 MHz.

9. Procédé d'alimentation suivant la revendication 8, **caractérisé en ce que** la lampe (LP) à décharge à haute pression est une lampe à décharge à haute pression à vapeur métallique et aux halogénures et **en ce que** l'amplitude de la tension alternative produite sur le condensateur (C1) de résonance du circuit (L1, C1) résonnant série au moyen d'une amplification de résonance est comprise entre 500 V et 1,5 kV.

10. Procédé d'alimentation suivant la revendication 8, **caractérisé en ce que** la fréquence porteuse de la tension alternative modulée en fréquence est comprise entre 500 kHz et 2,9 MHz.

11. Procédé d'alimentation suivant la revendication 8, **caractérisé en ce que** l'excursion de fréquence de la tension alternative modulée en fréquence va de 10 kHz à 100 kHz.

12. Procédé d'alimentation suivant la revendication 8, **caractérisé en ce que** la fréquence de modulation de la tension alternative va de 100 Hz à 5 kHz.

13. Procédé d'alimentation suivant la revendication 8, **caractérisé en ce que** le montage est alimenté par une source de tension à basse tension.

14. Procédé d'alimentation suivant la revendication 13, **caractérisé en ce que** la source de tension à basse tension est une source de tension continue.

15. Procédé d'alimentation suivant la revendication 13, **caractérisé en ce que** la tension d'alimentation de la source de tension à basse tension est inférieure à 50 V.
